# EUROPÄISCHE PATENTANMELDUNG

(11) **EP 0 617 396 A2**
(43) Veröffentlichungstag der Anmeldung: **28.09.1994**
(21) Anmeldenummer: 93116223.4
(22) Anmeldetag: 07.10.1993
(51) Int. Cl.: G09F 19/12, G03H 1/24, G02B 5/18, G03H 1/02, G03H 1/04, G02B 5/32

(54) **Grosse Transmissions-Regenbogenhologramme für wetterfeste, weit sichtbare Werbeflächen**

(30) Priorität: 10.10.1992 DE 4234191; 04.03.1993 DE 4307277; 28.07.1993 DE 4325299
(71) Anmelder: Hördum, Martin, D-50678 Köln (DE)
(72) Erfinder: Hördum, Martin, D-50678 Köln (DE)

(57) **Zusammenfassung**

Bei der Masterkopieherstellung(1) mittels Schablonen(2) mit unterschiedlichen Aufnahmegeometrien(3,4,5,6) werden im gewünschten Beobachtungsbereich(7) die Motive der Schablonen(2) in großen Entfernungen(7) in den gewünschten Spektralfarben sichtbar, wenn der Brennpunkt(6) der Referenzoptik(9) im Beobachter-Augenpunkt(7) liegt und der Brennpunkt(5) der Masteroptik(10) im Leuchtmittelpunkt der Weißlichtlampe liegt.

## Beschreibung

Große Transmissions-Regenbogenhologramme für wetterfeste weit sichtbare Werbeflächen werden mit einem speziellen Aufnahmeverfahren hergestellt und mit einer analogen Ausleuchtung das Motiv gezielt sichtbar gemacht in den Spektralfarben der Holografie.

Fernsichthologramme sind als Regenbogenhologramme in den Spektralfarben zu sehen und unter 200 m mit 3D-Motiven zu erkennen. Die ganze Fläche bleibt im Nah- und Fernbereich rekonstruiert im Rahmen der Öffnungswinkel, die von der Aufnahme-, Rekonstruktions- und Beleuchtungsgeometrie zusammen abhängen.

Der Beugungswirkungsgrad erreicht fast 100%, wenn die erforderliche genaue Abstimmung zwischen Aufnahme-, Rekonstruktions- und Beleuchtungsgeometrie für jeden Punkt des Hologramms eingehalten wird, unabhängig davon, ob mit passendem Kunstlicht oder Sonnenlicht beleuchtet wird. Für die Rekonstruktion mit Sonnenlicht sind Hologramme mit mehr als einem Referenz- oder Objektlicht geeignet, da, durch die Wanderung der Sonne bedingt, die Beleuchtungsgeometrie von allen Richtungen aus das Hologramm rekonstruieren soll.

Der Helligkeitsverlust durch die Belichtung mit mehr als einem Referenz- oder Objektlicht wird durch die vielfache Lichtstärke der Sonne gegenüber dem Kunstlicht ausgeglichen. Der Stator-Solarkonzentrator ist ein Sonnenlichtkonzentrator-Modul ohne Nachführung, für thermische- und photovoltaische Solarenergieanlagen und Solar- und Kunstlichtlenkungssysteme.Es besteht aus einem starren Hologrammsystem mit einem ortsfesten Brennpunkt, das dem jeweiligen Sonnenstand nicht nachgeführt werden muß. Das Hologrammsystem besteht aus mehreren Solar-Hologrammschichten, die je nach Aufnahmetechnik plan, zylindrisch oder kugelförmig gestaltet sind.

Die Ausrichtung zur Sonne ist je nach baulicher Voraussetzung unterschiedlich. Mehrere Hologrammsysteme, auch unterschiedlicher Bauform, können auf einen Brennpunkt konzentriert werden.Alles einfallende Licht auch Streulicht wird auf einen ortsfesten Brennpunkt konzentriert, unabhängig von der Einfallsrichtung des Lichts oder der Bewegung der Lichtquelle. Je größer die Anzahl der Hologrammschichten, desto kleiner der Brennpunkt. Der günstigste Abstand der Hologrammschichten zueinander ergibt sich aus der Beugungs-Strahlengeometrie innerhalb der Schichten bezogen auf den Brennpunkt. Die Energiedichte im Brennpunkt wird größer, je größer die Hologrammsystemfläche ist. Die Hologrammfläche für einen Brennpunkt kann beliebig groß sein, sodaß ein extrem hoher Konzentrationsfaktor, extrem hohe Temperaturen und eine extrem hohe Lichtstärke im Brennpunkt möglich ist.

### Stand der Technik

Holografien üblicher Bauart sind " 3D-Bilder" oder "HOE's".

Der 3D-Effekt verliert sich ab 120m Entfernung, da er vom Augenabstand des Betrachters abhängt.

Größe Hologramme üblicher Bauart, von einem Standort aus großer Entfernung betrachtet, werden, wenn überhaupt, nur teilweise rekonstruiert, und die rekonstruierten Spektrelfarben verblassen. Die Hologrammbeleuchtung üblicher Bauart ist nicht für die besonderen unterschiedlichen Anforderungen an die maximale Rekonstruktion der Hologramme konstruiert und ermöglicht daher nur eine eingeschränkte Wirkung im Nahbereich und für den Fernbereich fast gar keine. Bei Hologrammen üblicher Bauart ist die Rekonstruktion im Außenbereich, bei Tageslicht mit Kunstlicht beleuchtet, nur sehr schwach zu sahen. Die Konfektionierung von Hologrammen für den Außenbereich üblicher Bauart zwischen Glas sind nicht rundum wetterfest und haben sichtbare Befestigungsvorrichtungen.

Solarkonzentratoren für thermische-, photovoltaische Solarenergieanlagen und Solarlichtlenkungssysteme üblicher Bauart müssen der ständig wandernden Sonnenstrahlung zweiachsig nachgeführt werden. Für die Nachführung der Konzentratoren ist eine elektronisch gesteuerte, mechanische Anlage notwendig. Sind die Konzentratoren statisch, müssen die thermischen-und photovoltaischen Energieumwandler und Lichtlenkungsoptiken dem wandernden Brennpunkt nachgeführt werden.

Die Nachführung der Module erfordert hohen technischen Aufwand, mit hohen Kosten und großer Störanfälligkeit.

### Problem

Der in Anspruch 1 angegebenen Erfindung liegt das Problem zugrunde, eine holografische Werbefläche zu schaffen, die auch in großen Entfernungen mit geringem Energieaufwand mittels der spektralen Farben der Regenbogenholografie Motive und Informationen aller Art zeigen kann und sowohl von der Sonne ohne Energie, als auch mit gerichtetem weißen Kunstlicht sichtbar wird.

Der im Anspruch 1 angegebenen Erfindung liegt das Problem zugrunde, Aufnahme-, Rekonstruktions-, Beleuchtungs-, Konfektionierungs- und Anwendungstechniken zu schaffen, die aufeinander abgestimmt sind, damit eine gezielte optimale Rekonstruktion nach örtlichen Gegebenheiten mit Sonnen- oder Kunstlicht möglich ist, wobei das Hologramm auf der ganzen Fläche gleichmäßig rekonstruiert, im 3D-Bereich bis 200 m genau so hell und ganzflächig wie im Fernbereich als Spektralfarbengestaltungsmittel.

Der im Anspruch 1 angegebenen Erfindung liegt das Problem zugrunde, ein Solarkonzentrator-Modul ohne jede Machführung zu schaffen , das in verschiedenen Bauformen und unterschiedlichen Größen gebaut werden kann und für thermische- und photovoltaische Solarenergieanlagen und Solar- und Kunstlichtlenkungssysteme geeignet ist und das die direkte Sonnenstrahlung aus unterschiedlichen Richtungen und Streulicht in einen festen Brennpunkt bündelt.

### Erfindung

Diese Problem wird mit dem Maßnahmen der Ansprüche 1 bis 31 gelöst.

### Vorteilhafte Wirkung der Erfindung

Mit der Erfindung wird im Anwendungsfall erreicht, daß beliebig große holografische Flächen gestaltet werden können ,die mit kostenloser Sonnerlichtstrahlung am Tag und geringem Energieaufwand bei Kunstlicht Tag und Nacht gezielt über große Entiermungen Motive und Informationen ausstrahlen in den Spektralfarben der Holografie. Der Ort der Sichtbarkeit kann genau bestimmt sein und nach Plan auch in der waagerechten oder horizontalen wachsein.

Mit der Erfindung wird im Anwendungsfall erreicht, daß holografische Flächen und Gegenstände hergestellt werden können, die ihre Informationen präzise gesteuert im Nah- und Fernbereich dreidimensional und spektralfarbig gestaltet vermitteln. Durch die genau abgestimmten Aufnahme-, Rekonstruktions-, Beleuchtungs- und Anwendungstechniken ist ein maximaler Wirkungsgrad und ein dementsprechend geringerer Energieaufwand für die Rekonstruktion dieser Fernsicht-Hologramme gegeben.

Mit der Erfindung wird im Anwendungsfall erreicht, daß bei thermischen- und photovoltaischen Solarenergieanlagen und Solar- und Kunstlichtlenkungssystemen alles direkte Sonnenlicht, Streulicht und Kunstlicht, das auf den Stator-Soloarkonzentrator fällt auf einen festen Brennpunkt gebündelt wird, ohne daß eine aufwendige Nachführungsanlage notwendig ist. Die gesamte Einstrahlenergie der Sonne, bezogen auf die Konzentratorfläche, kann von Sonnenaufgang bis -untergang zum festen Brennpunkt gebeugt werden, Je nach Größe der Hologrammsystemfläche können höchste Solarenergiedichten erzeugt werden.Durch die durchgängig statische Ausführung des Konzentratorsystems ist eine große Kostanersparnis bei den Energieanlagen möglich. Bei thermischen Energieanlagen lasen sich hohe Temperaturen auf kleinstem Raum erzeugen. In photvoltaischen Anlagen läßt sich die Sonnenlicht-konzentration so auslegen, daß die maximale Wirkung einer Solarzelle erreicht wird. Bei Lichtlenkungssystemen kann Solarlicht ohne mechanisch bewegte Teile gebündelt weitergeleitet werden.

### Weiterbildung der Erfindung

Vorteilhafte Ausgestaltungen der Erfindung sind im den Ansprüchen 1 bis 31 angegeben. Die Variationsmöglichkeiten sind groß und die Anwendungsbereiche überall dort wo es um sichtbarmachen von Motiven und Informationen geht.

Für die Fern- und Nahwirkung,
für den Außen- und Innenbereich,
für jede Tages- und Nachtlichtsituation,
für einen engen ung weiten Beobachterbereich,
für statische und sich Bewegende Beobachter,
für statische und sich bewegende Hologramme,
für gerade und gebogene Hologramme,
für sich biegende Hologramme,
für punktförmige und über-Quadratmeter große Hologramme,
für monochrome und vielfarbige Rekonstruktionen,
für kleinteilige und großteilige Hologramme,
für 3D Motive bis 200 m und spektrale Gestraltungen bis 200 m und mehrere Kilometer,
für Sonnen- und Kunstlichtrekonstruktionen,
für statische und sich bewegende Hologrammbeleuchtungen,
für zwei- und dreidimensionale Motive bei der Aufnahme der Hologramme,
für die Benutzung von Schablonen und Raster bei der Aufnahme,
für die Herstellung von allen Arten von Hologrammen, wie Laser- und Weißlichthologrammen, Transmissions- und Reflexionshologrammen, Gitterhologrammen und holografisch optischen Elementen,
für statische und sich bewegende Motive bei der Rekonstruktion,
für statische und computergesteuerte Werbeflächen,
für gerade und gebogen Hologrammfilme,
für eine und mehrere Referenzlichtquellen bei der Aufnahme,
für eine und mehrere Objektlichtquellen,
für gerade und gekreuzte Masterstreifen,
für kurze und lange Masterstreifen bezogen auf die Hologrammbreite,
für wetterfeste Konfektionierung zwischen Glas,
für farbige Beleuchtungen im Innen- und Außenbereich,
für farbige Signallampen von Quadratmillimeter bis Quadratmetergröße,
für kleine und große Birnen, die ihre Farbe wechseln,
für Beleuchtungen, die eine schräg angestrahlte Fläche gleichmäßig hell ausleuchtet,
für Armaturen, die an einer Stelle gleichzeitig verschiedene Informa tionen in verschiedenen Farben zeigt,
für Armaturen, die an einer Stelle nacheinander verschiedene Informationen in verschiedenen Farben zeigt,
für Kegel- und Keilförmige Beleuchtungsstrahlen,
für Beleuchtungen mit mehreren Punktlichtquellen mit nur einem Leuchtmittel,
für die Rekonstruktion von parallelen Strahlen gleicher Wellenlänge mit kegelförmigem, keilförmigem und parallelen Lichtstrahlen,
für verspiegelte und durchsichtige Fenster, Türen, Wände, Decken und Böden,
für Fußgänger- und Autoleitsysteme,
für Informationstafeln und Verkehrsschilder,
für alle Arten von Pictogrammen,
für weit im Umkreis gerichtete und auf einen Punkt bezogene Informationen,
für farbige Anstrahlung von Gebäuden und Räumen,
für thermische Solarenergieanlagen,
für photovoltaische Solarenergieanlagen,
für Solar- und Kunstlichtlenkungssysteme,
für Solar-Hochtemperaturanlagen,
für Solar-Wärmespeicher,
für plane, zylindrische und kugelförmige Bauteile und Zwischenformen,
für alle Arten von Fahrzeigen, Schiffen, Fluggeräten, Raumschiffen,
für große und kleine Formate,
für alle Arten von Gebäuden und Flächen,
für alle Standorte auf der Erde und im Weltraum,
für Solar-Kochstellen,
für die Erzeugung von Dampf und Schmelztemperaturen,
für die Solarausleuchtung von Räumen,Tiefgaragen und Tunnel,
für Solaranlagen zwischen Schienensträngen,
für Solaranlagen in Fenstern, an Faßaden und auf Dächern,
für Nachtlichtsammler,
für Solarenergie- leitungen, -schaltungen, -sammler, -verstarker und -verteiler,
für Spektrallampen von Hologrammbildplatten,
für streulichtfreie Scheinwerfergläser,
für Lichtschrankentechnik,
für Linsen in der Optik,
für die Wärmequelle von Stirlingmotoren,
für Solarenergie Ring- und Fernleitungen.

### Darstellung der Erfindung

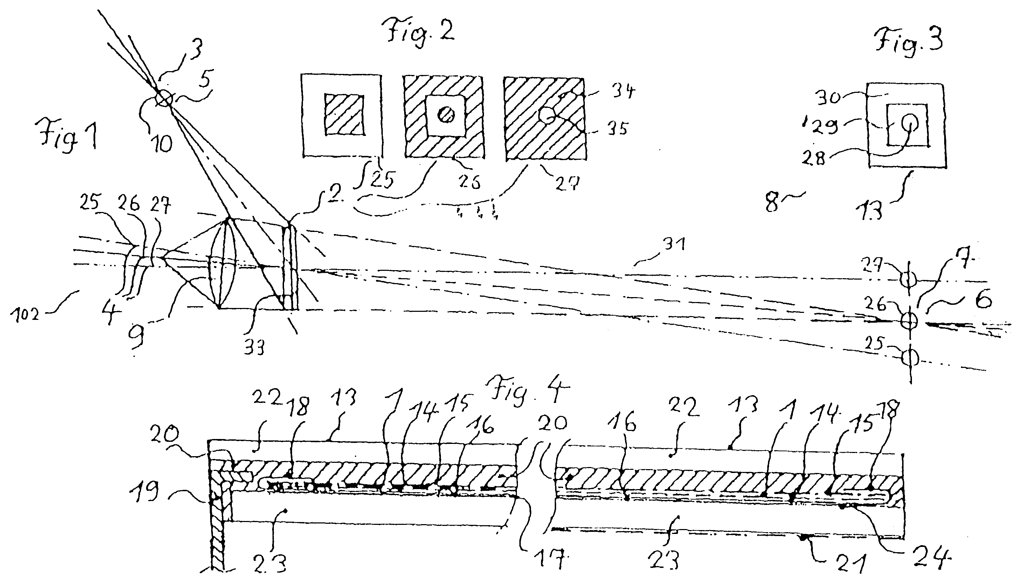

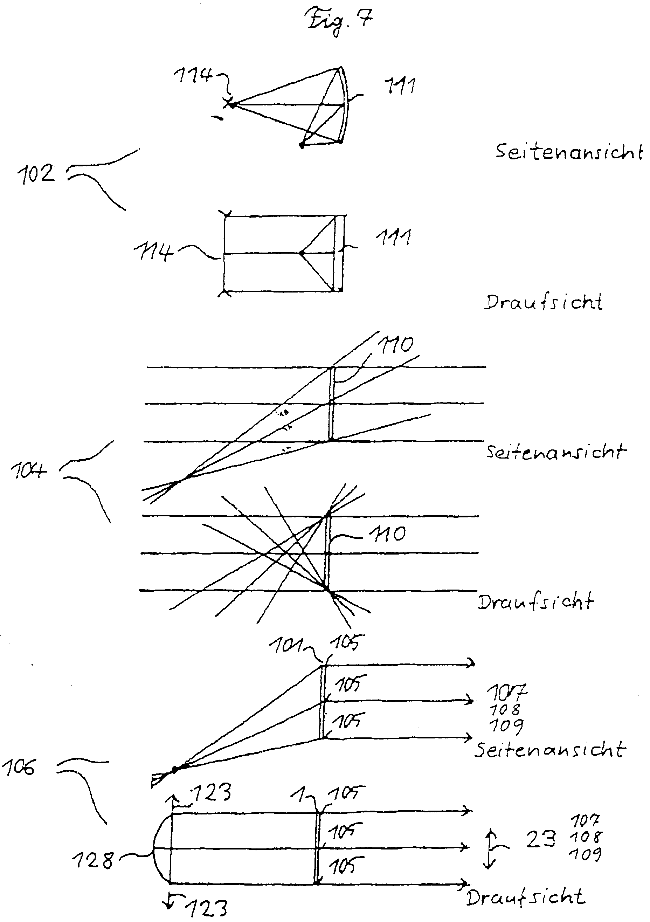

- Fig.1: Herstellung einer Regenbogenhologrammkopie, bezogen auf die durchgezogenen Linien der Fig.5.
- Fig.2: Schablonenbeispiel für zu belichtende Teilhologramme aus verschiedenen Winkeln.
- Fig.3: Wirkung der Werbefläche im gewünschten Beobachterpunkt.

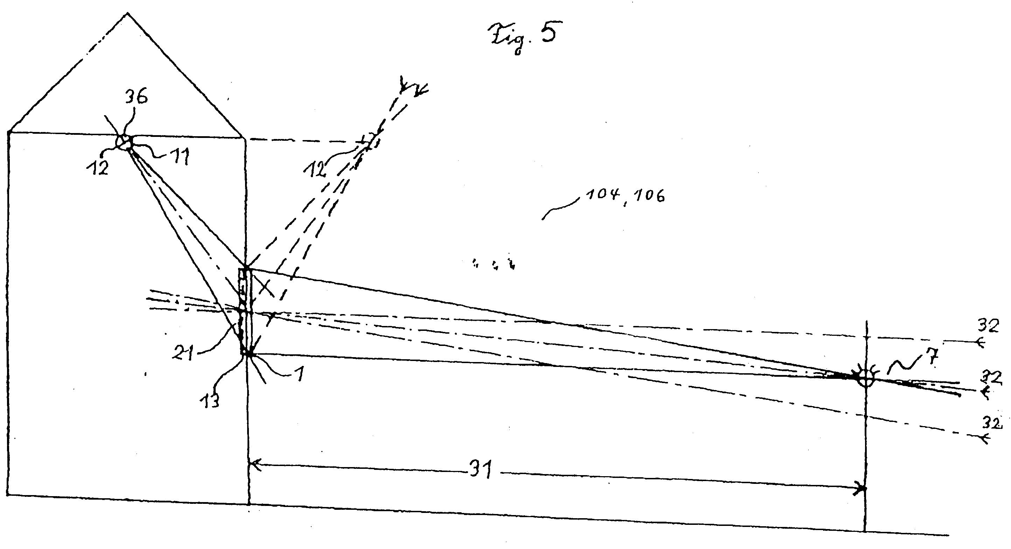

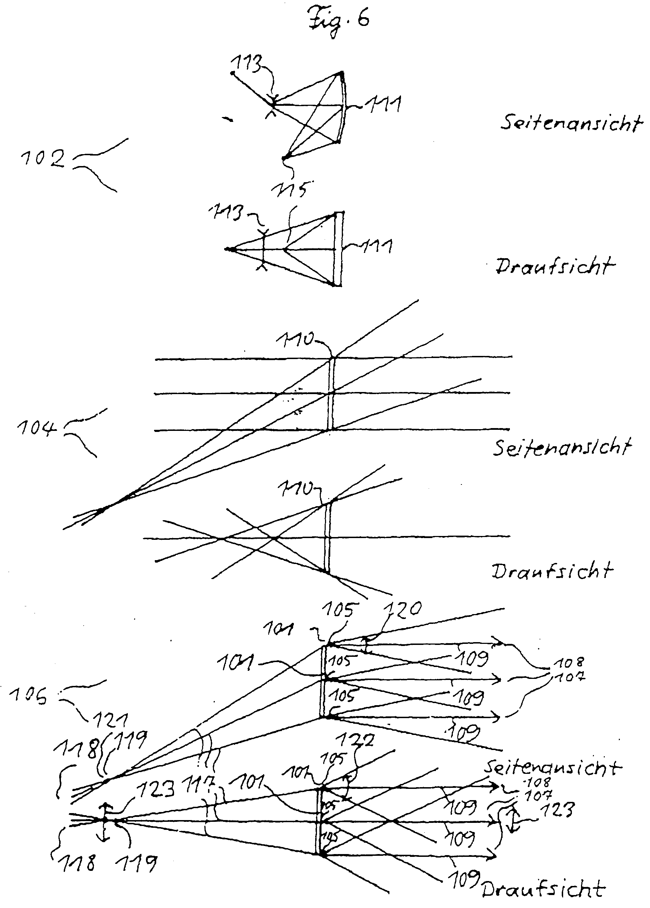

- Fig.4: Wetterfeste Konfektionierung des Hologramms, das hernetisch abgeschlossen ist als Sicherheitsscheibe.
- Fig.5: Orts- und Beleuchtungssituation als durchsichtiges Fenster (durchgezogene Linien) und als verspiegelte Fläche (gestrichelte Linien).

### Fig. 6

Das Regenbogen-Transmissionshologramm (110) hat bei der Aufnahme (102) einen gebogenen Holografiefilm (111) und einen kurzen Masterstreifen (113).

Die Rekonstruktionsgeometrie (104) bewirkt nach dem planstellen des Hologramms (110), daß die Hologrammbeleuchtung 18) von einem Brennpunkt (119) ausgeht. Der spektrale vertikale Öffnungswinkel (120) ist ca, 20°.

In der vertikalen Richtung und im Abstand zum Hologramm (101) kann die Position der Hologrammleuchte (118) nicht verändert (121) werden. Der waagerechte Öffnungswinkel (122) ist ca. 40°. In der Waagerechten ist der Brennpunkt (119) der Hologrammleuchte (118) begrenzt verschiebbar (123), dies bewirkt auch eine waagerechte Verschiebung (123) der Rekonstruktionsstrahlen (107).

### Fig. 7

Sind Hologrammfilme (111) waagerecht gebogen und mit hologrammbreitem Masterstreifen (114) belichtet, so können die Hologramme plan (110) bleiben, wenn sie horizontal mit der Keilstrahlenleuchte (128) rekonstruiert werden.

### Fig. 8

Bei der Hologrammbeleuchtung (118) mit einem Beleuchtungsbrennpunkt (119) kommt das Licht von einem Leuchtmittel (130) eine Elypsoidscheinwerfers (131) üblicher Bauart und wird an elypsoiden Reflektorteilen (132) über einen 2. Brennpunkt so zum Hologramm (101) geleitet, daß sich die Beleuchtungsstrahlen kreuzungsfrei und gleichmäßig hell (126) über die ganze Hologrammfläche (125) verteilen.

### Fig. 9

Bei dieser Hologrammbeleuchtung (118) mit einer Brennpunktlinie (124) kommt das Licht von einem Leuchtmittel (130) in einem Elypsoidscheinwerfer (131), wird an einem elypsoiden Reflektor (132) und einem Kreissegmentreflektor (133) reflektiert und tritt an der Brennpunktlinie (124) keilförmig (129) aus und beleuchtet das Hologramm (101) gleichmäßig hell, ohne daß sich die Beleuchtungsstrahlen (116) kreuzen.

### Fig. 10

Durch ein vertikales Biegen des Hologrammfilms (111) bei der Aufnahme (102) und ein horizontales Biegen des Hologramms (112) entsteht eine kurze Beleuchtungsgeometrie (106).

### Fig. 11

Durch horizontales Biegen des Hologrammfilms (111) tei der Aufnahme (102) und ein vertikales Biegen des Hologramms (112) wird die Masterlänge (114) im nachhinein scheinbar verkürzt (113).

### Fig. 12

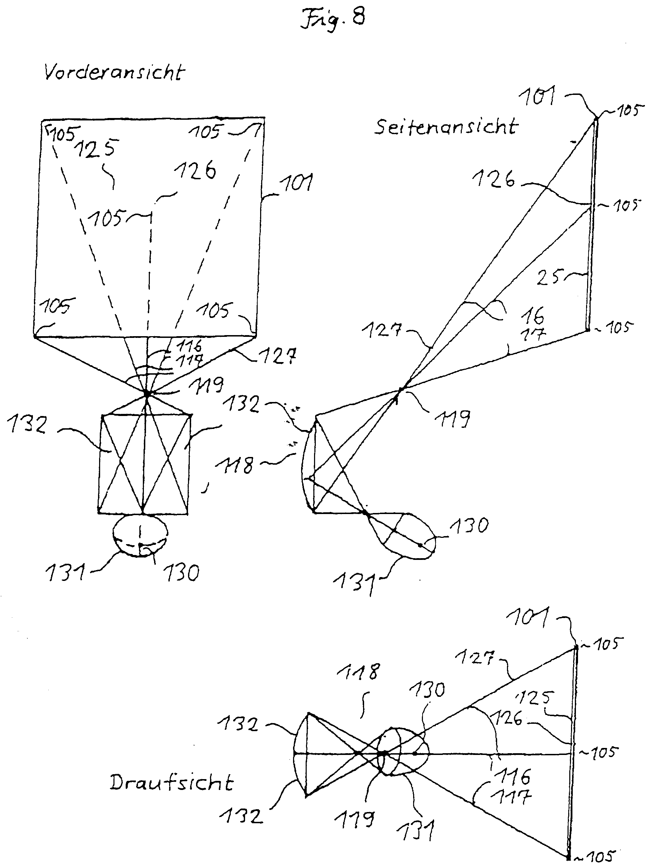

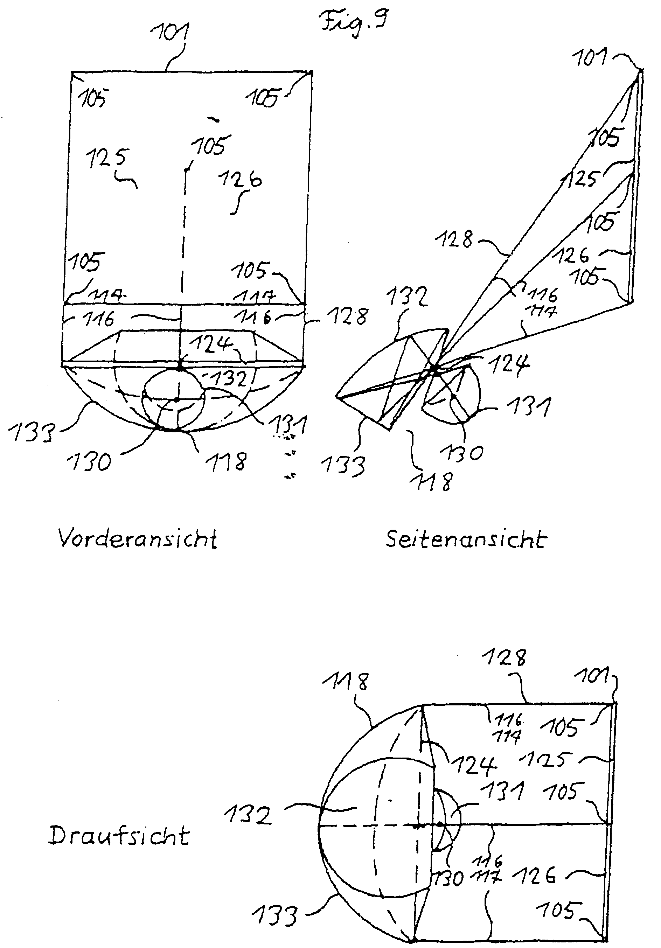

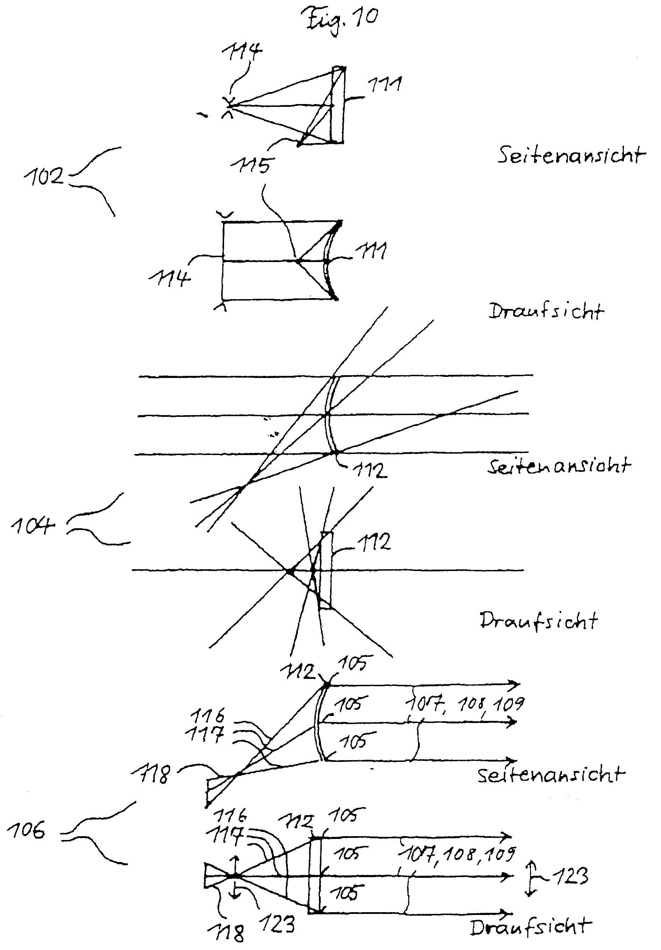

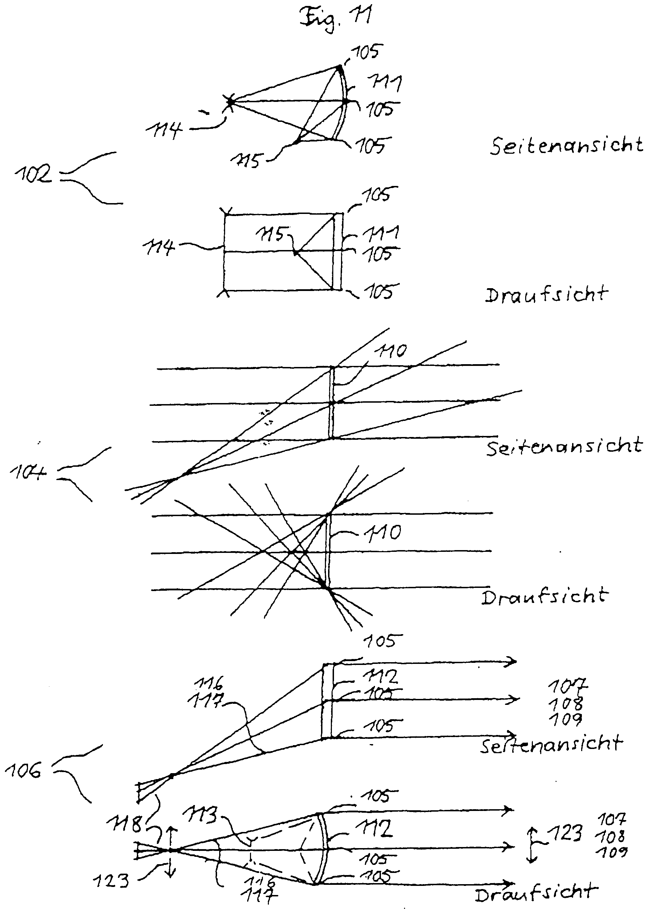

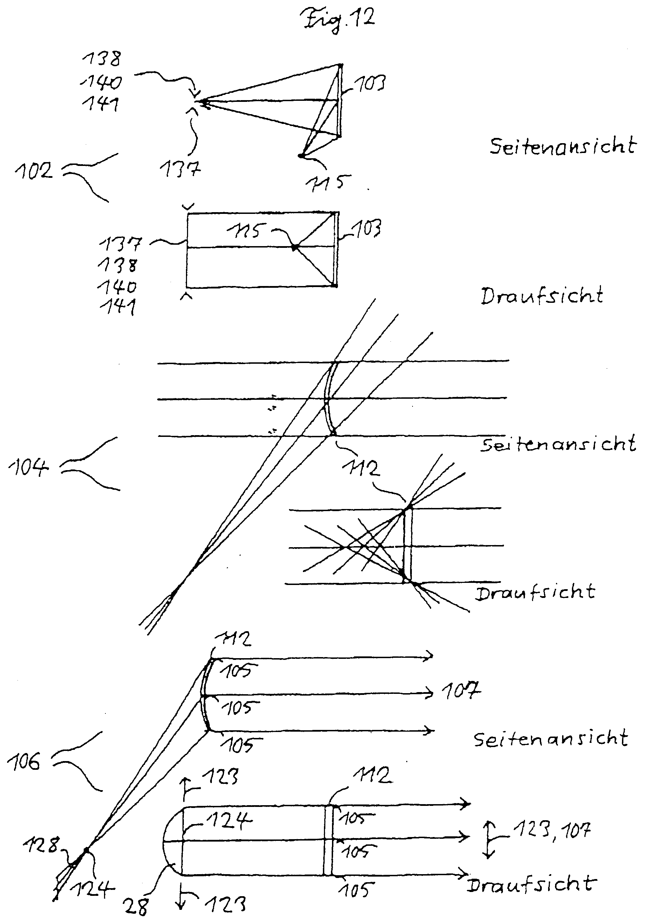

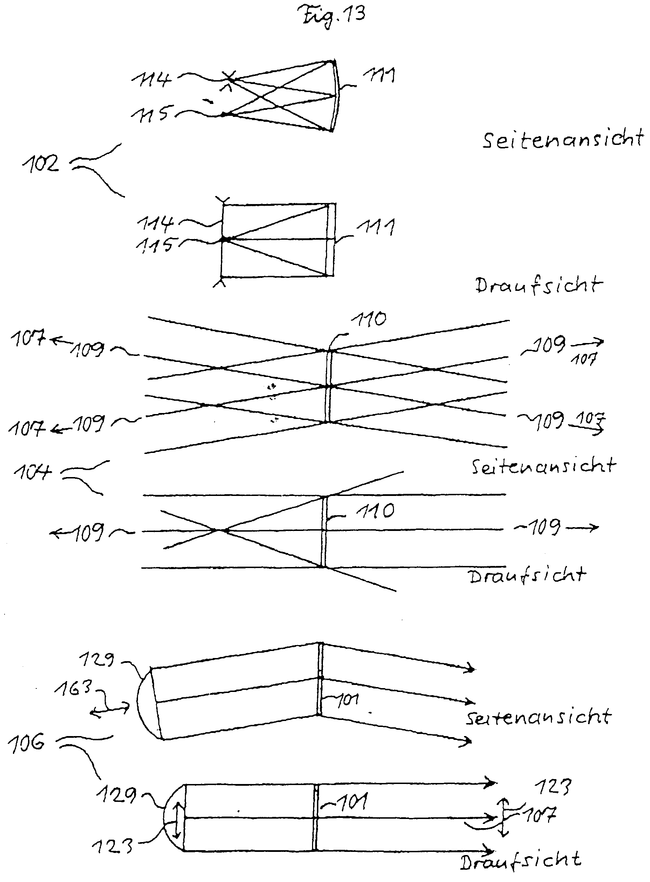

Hologrammfilme 3), die bei der Aufnahme (102) plan sind, lassen sich mit der Keilstrahlbeleuchtung (128), Fig. 8, ausleuchten, wenn das Hologramm (112) horizontal gebogen wird.

### Fig. 13

Hologramme mit gleichbreitem Master (114) und gebogenem Film (111) und symmetrischer Masterverteilung (114) und Referenzverteilung (115), ergeben beim Planstellen des entwickelten Films 2 parallele Rekonstruktionsbündel (109), die von allen 4 Richtungen mit einem parallelstrahlenden Scheinwerfer (129) rekonstruieren, wobei die Lichtquelle (129) in der Seitenansicht vor und zurück (163) und in der Draufsicht seitlich hin und her (123) bewegt werden kann, die Rekonstruktion (107) verändert sich entsprechend.

### Fig. 14

Mit 2 Referenzen (115) von verschiedenen Positionen aus belichtete gebogene Hologrammfilme rekonstruieren doppelt. In vorbestimmten Brennpunkten (119) lassen sich Punktlichtquellen (158). Diaprojektoren (159) oder Filmprojektoren (100) installieren, die mit abgestimmtem Licht aus verschiedenen Richtungen und zu verschiedenen Zeiten unterschiedliche spektralfarbene Farbmotive (155) für den Betrachter (153) erzeugen.

Durch gezielte Doppelbelichtungen lassen sich Mischfarben erzeugen.

Weiter ergibt sich für die Rekonstruktion (107) die Möglichkeit, durch Verändern der Beleuchtungposition (123) die Farbwirkung (155) auf dem Hologramm (110) zu ändern.

### Fig. 15

Hologrammfilm (103), plan aufgenommen (102), mit 2 Referenzen (115) rekonstruiert (107) in 2 Richtungen in der Seitenansicht, und in einer Richtung in der Draufsicht. Die Hologrammbeleuchtung (118) mit einer parallelstrahlenden Lichtquelle (129,134) ist von beiden Seiten des Hologramms (101) möglich, wobei die Lichtquelle (129,134) in allen 3 Raumrichtungen bewegt werden kann. Die Rekonstruktionen (107) bewegen sich entsprechend mit.

Umgekehrt kann das Hologramm (101) bei festen Beleuchtungspositionen (118) und Beobachterpostionen (153) um seinen Mittelpunkt in der Vertikalen pendeln.

### Fig. 16

Bei der Rekonstruktion (107) einer kreuzförmigen Masteraufnahme (114) kann das Hologramm (110) die Lichtstrahlen so beugen, als wenn sie von einem dünnen Medium in ein dichtes Medium strahlen. Ein Fernsicht-Hologramm (101) entsteht hier, wenn die einfallenden Strahlen parallel sind.

### Fig. 17

Hologrammfilme (111), die mit schwarzen Motivschablonen (135,136) teilweise abgedeckt werden und aus unterschiedlichen Masterpostionen (141) belichtet werden, ergeben mit einer Hologrammleuchte (118) ausgeleuchtet, spektralfarbige Bilder, entsprechend dem Motiv (154). Die Motivschablonen (135,136) können rasterartig (136) oder figurativ (135) sein.

### Fig. 18

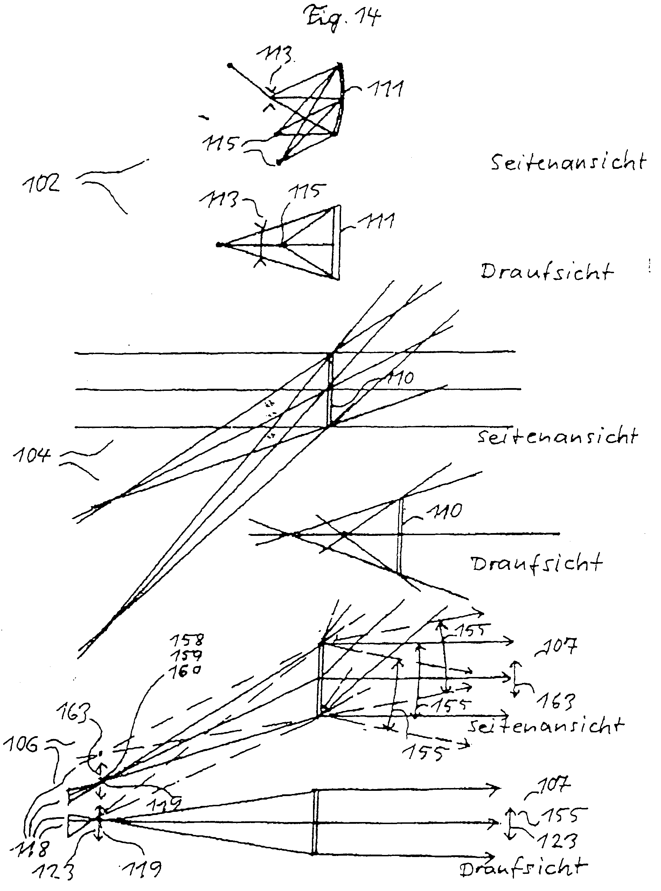

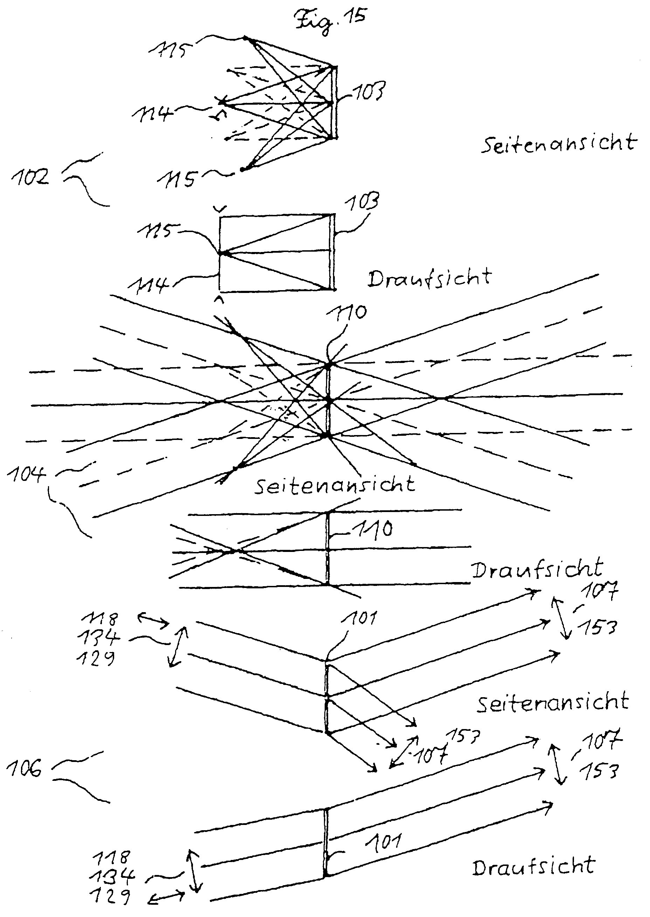

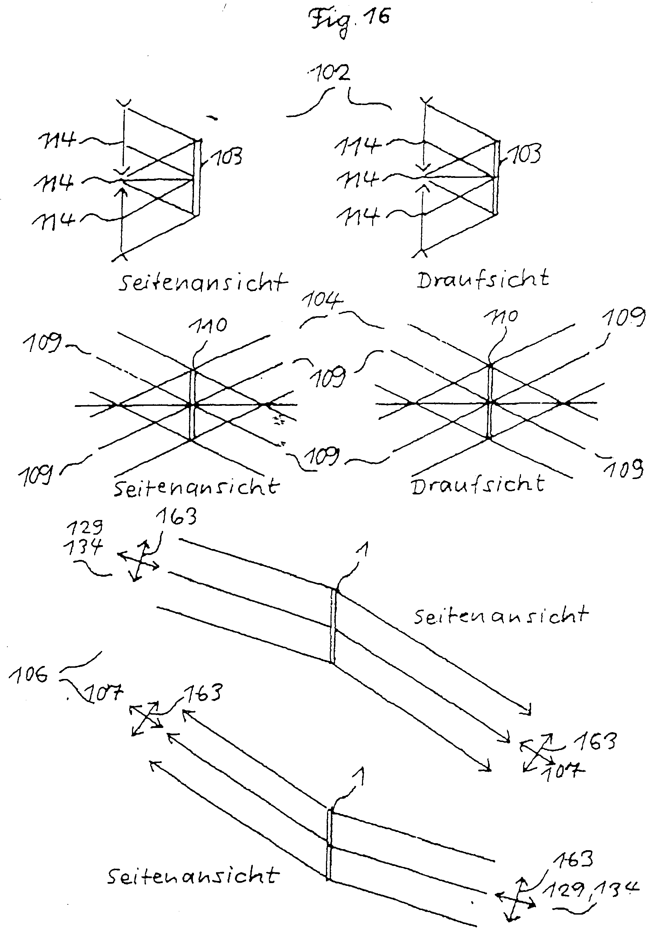

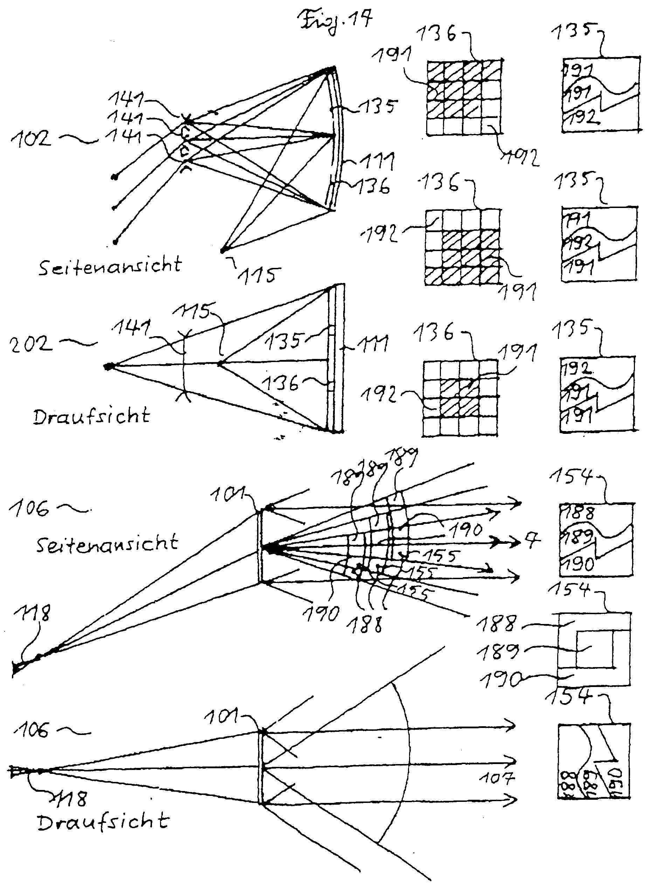

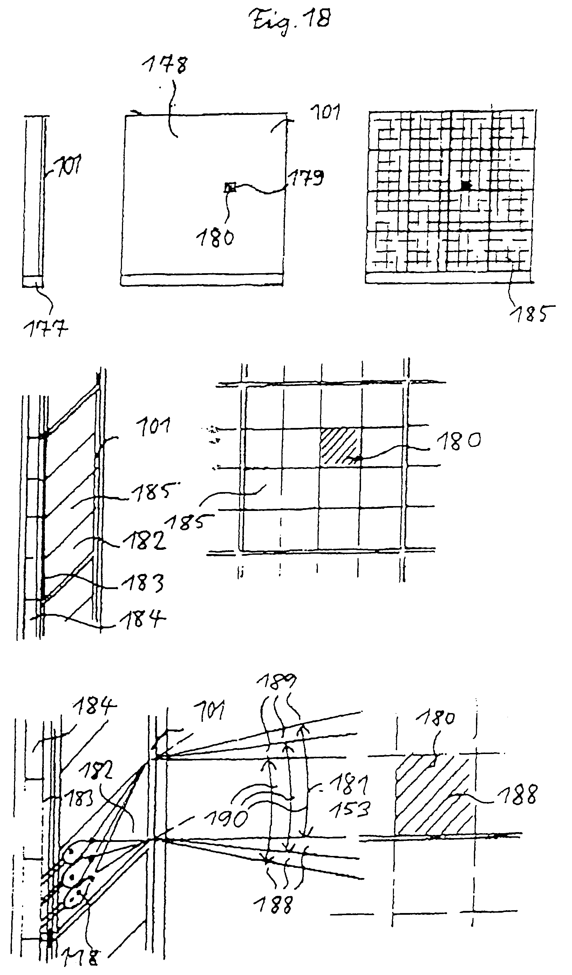

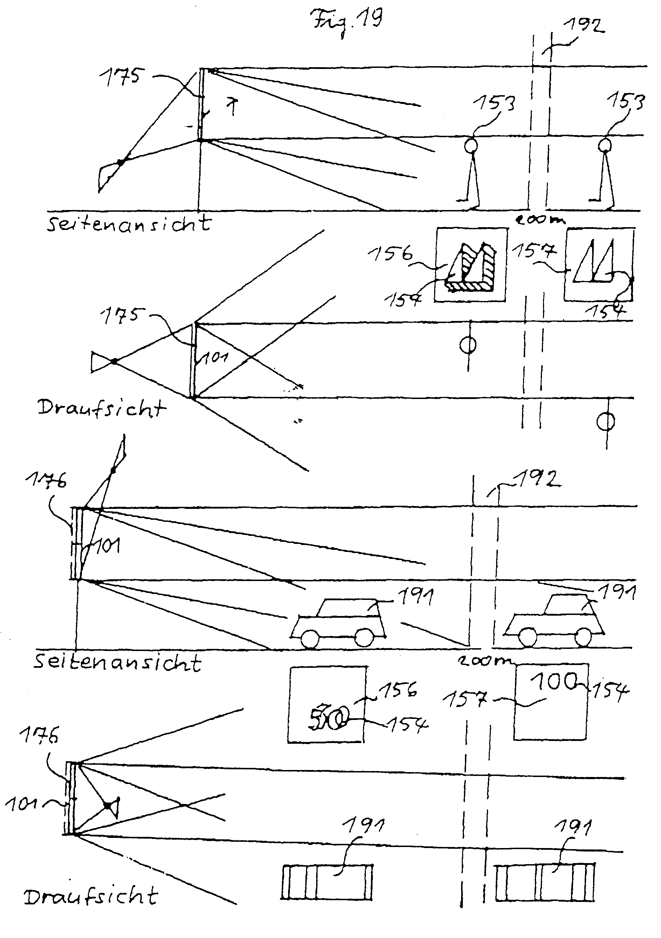

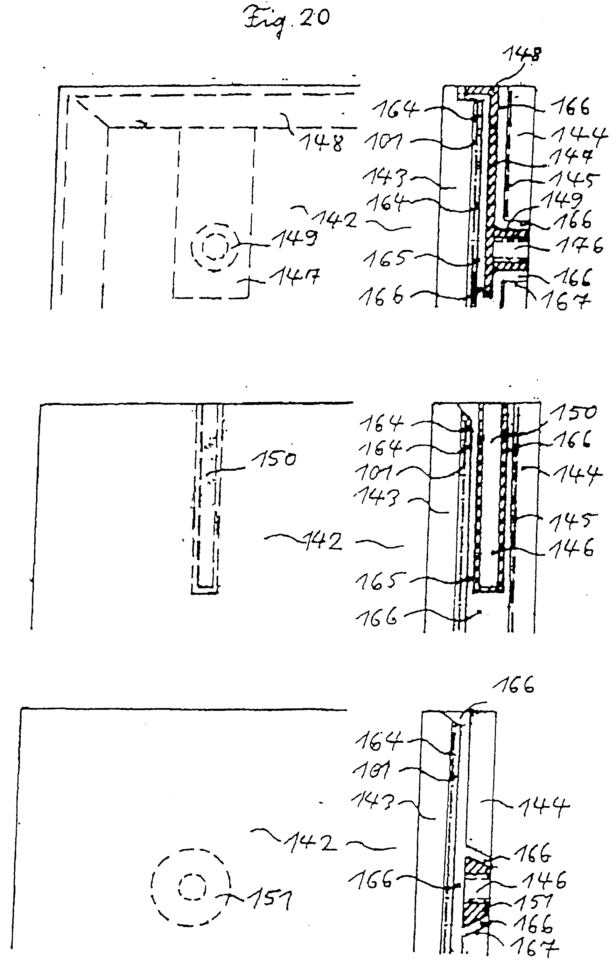

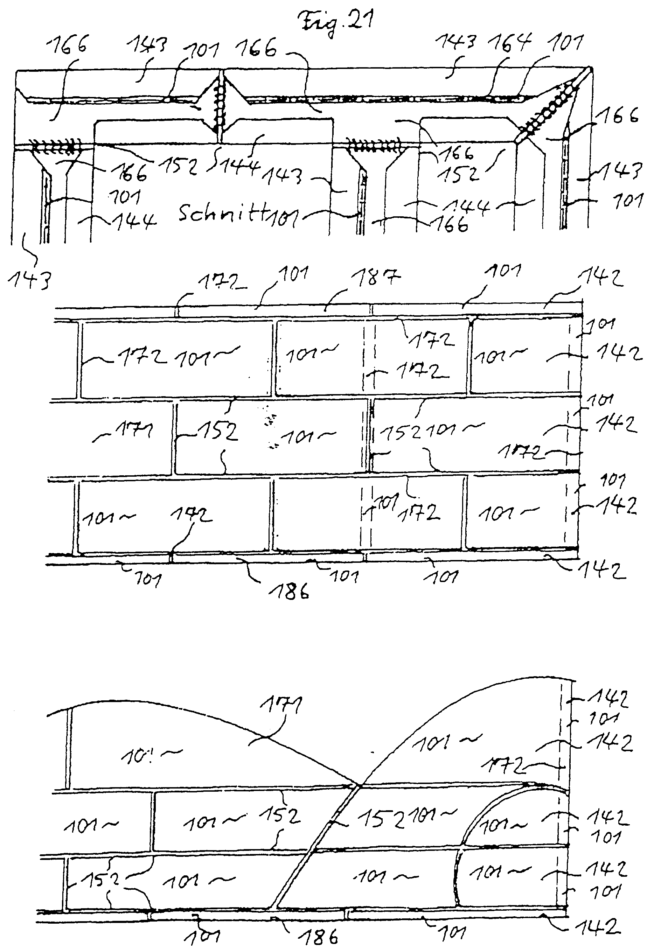

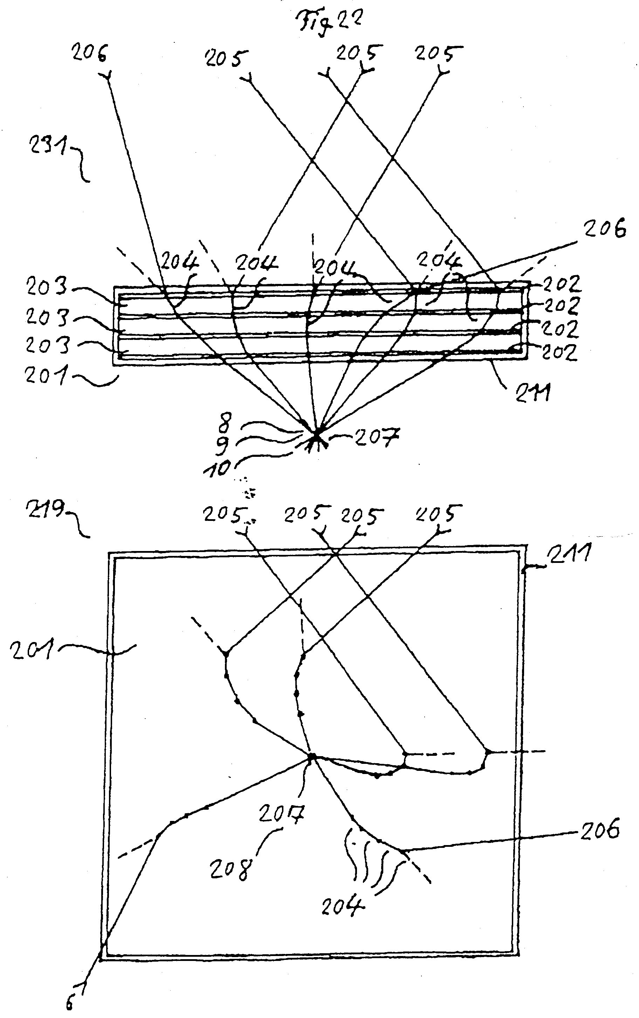

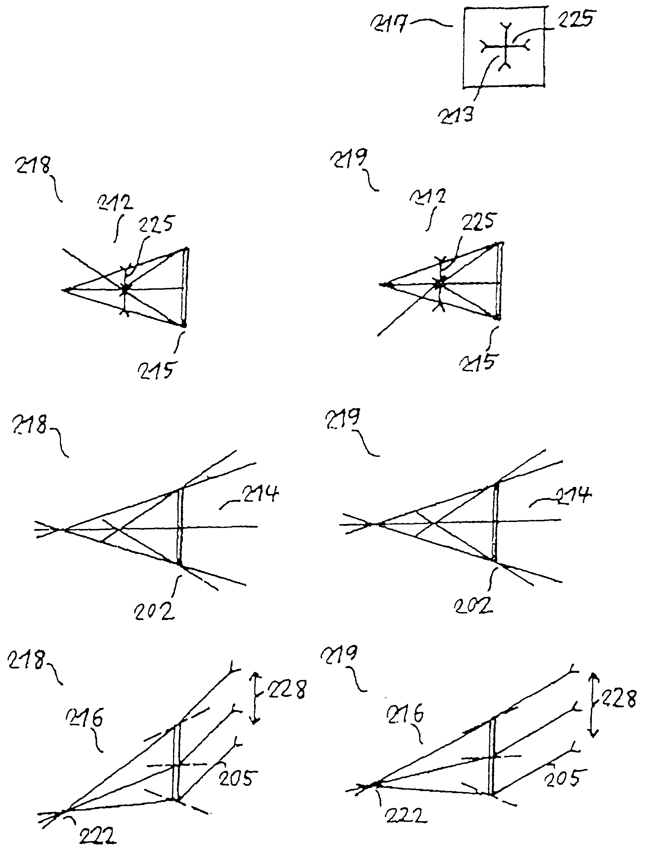

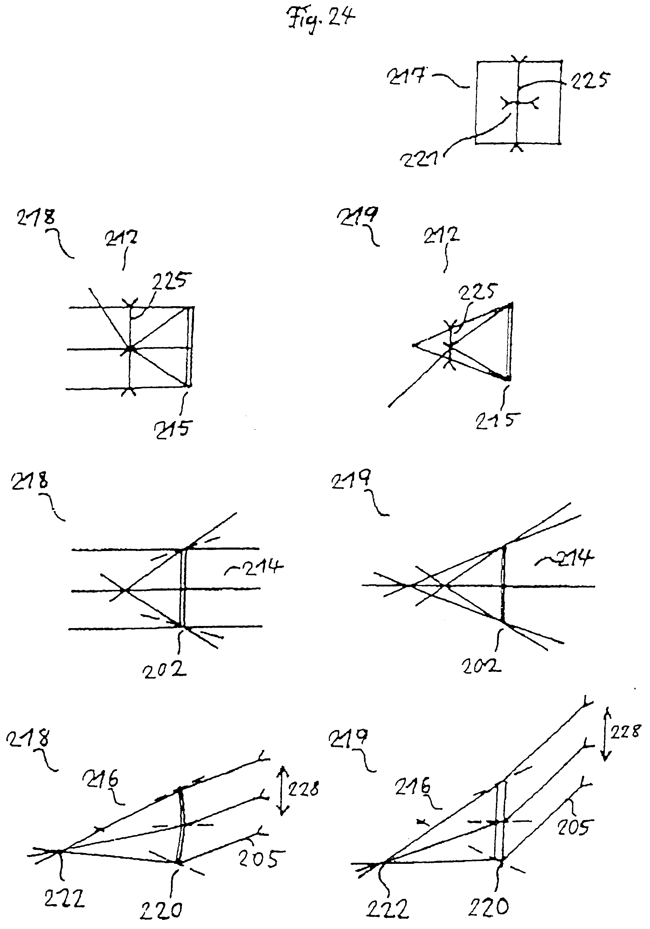

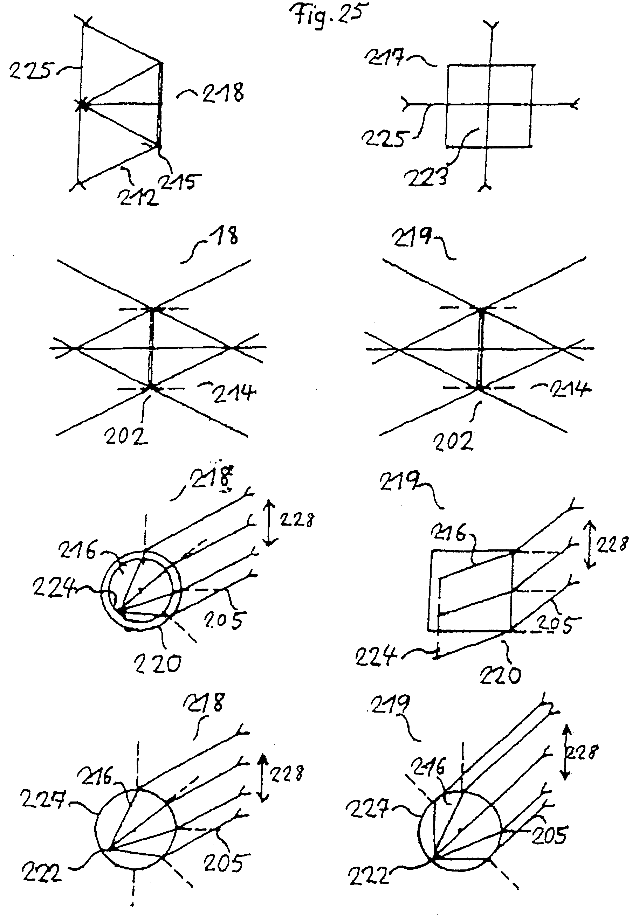

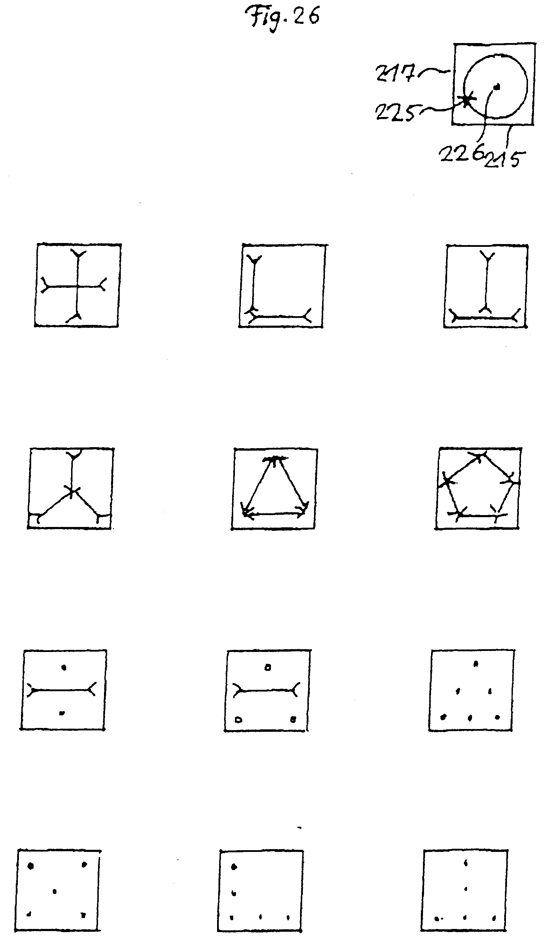

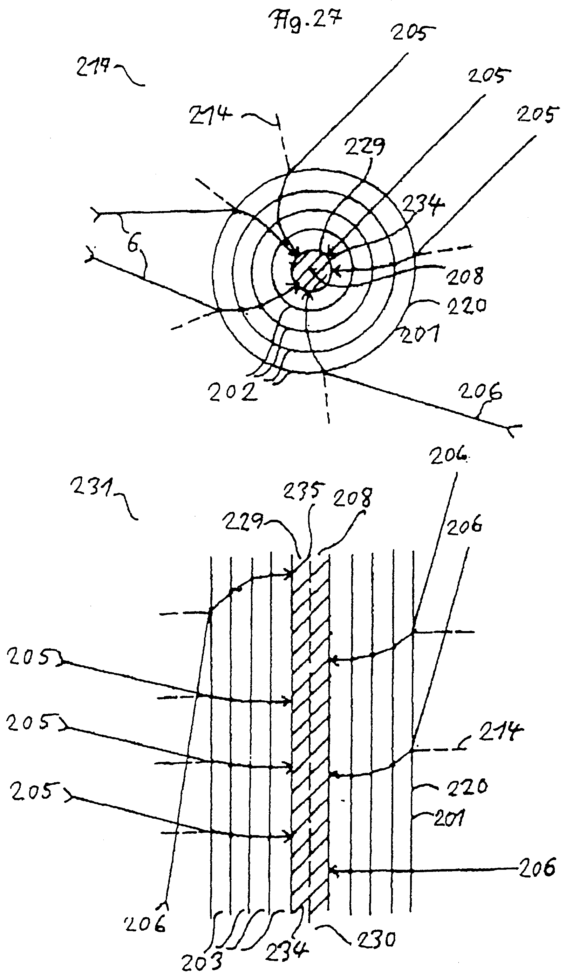

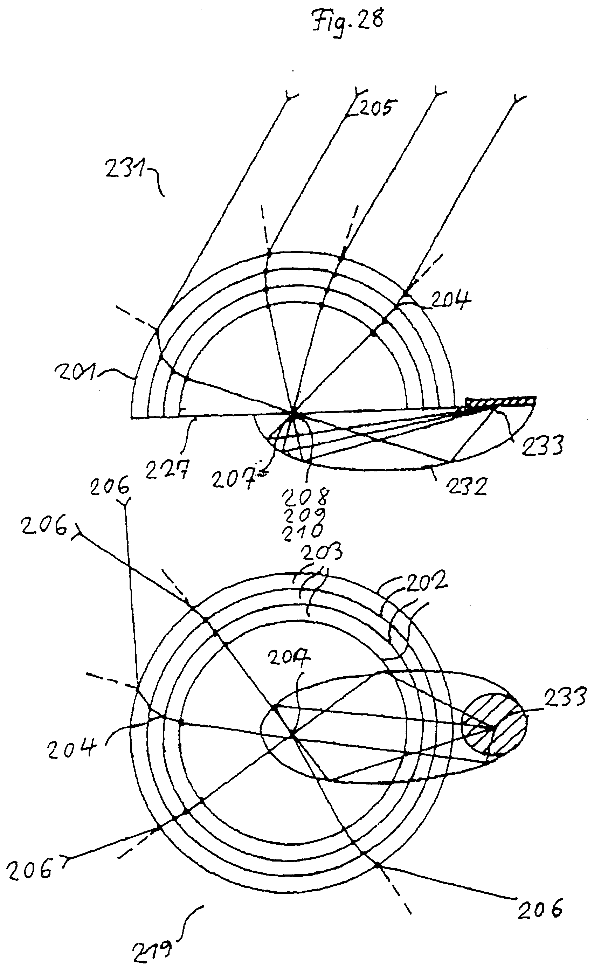

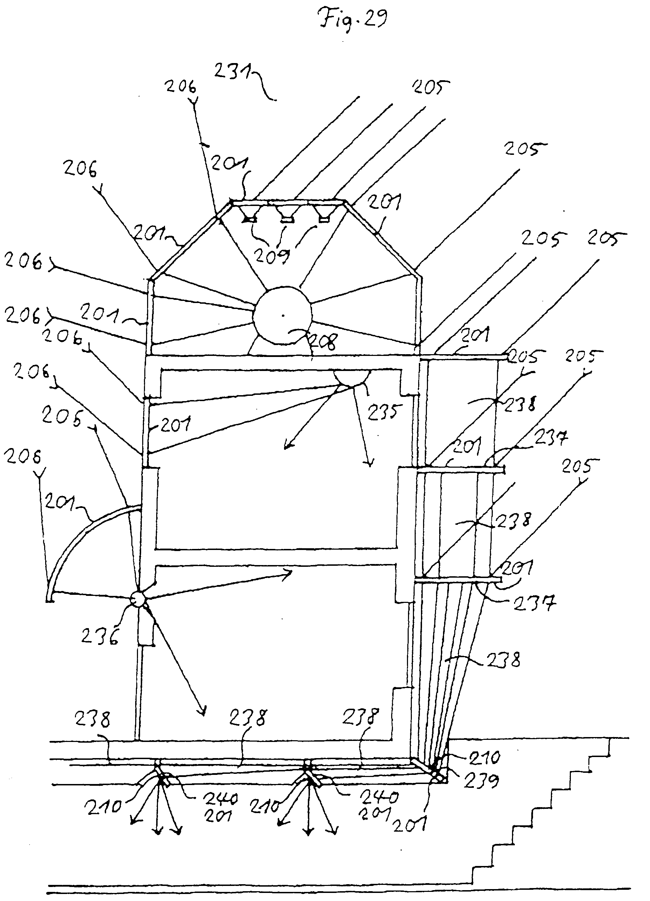

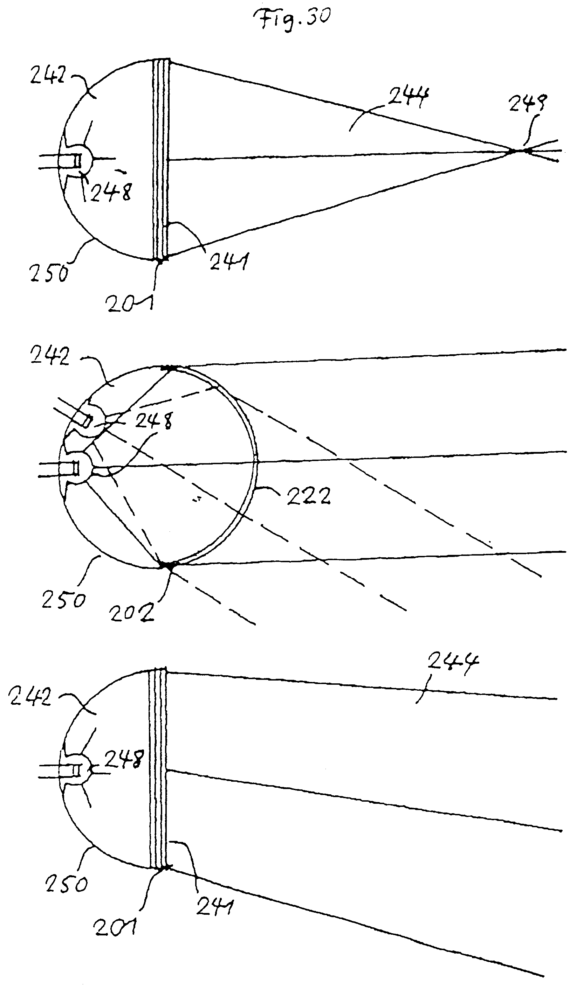

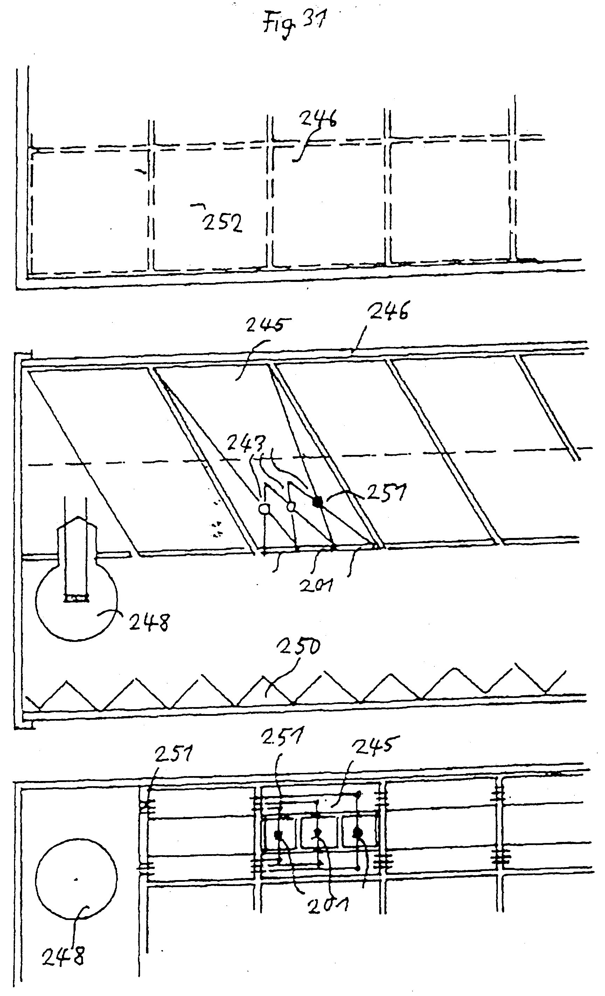

Computergesteuerte Regenbogenhologramm-Bildfläche nach der Technik der Fig. 14 hergestellt.

### Fig. 19

Hier zwei Beispiele von Hologrammen (101), die entfernungsabhängig (192) dem Betrachter (153) oder Autofahrer (191) Informationen mittels 3D-Bildern (156) vermitteln oder spektralfarbener Motive (157): 1. Informationstafel (175) und 2. Verkehrsschild (176). Bewegt sich der Betrachter (153) von Bereich über 200 m in den Bereich unter 200 m, so kann ein Motiv (154) vom reinen Spektralbild zum 3D-Bild wechseln. Bei dem Verkehrsschild können einzelne Motive auf Hologrammteilen nacheinander vom fahrenden Auto aus gesehen werden.

### Fig. 20

Die rundum wetterfeste Konfektionierung (142) zwischen Glas (143,144) besteht aus Vorderglas (143), doppelseitiger Klebefolie (164), Hologramm (101), doppelseitiger Klebefolie (164), Kunststoff- oder Metallfolienspiegel (165), Befestigungsvorrichtungen (146), die in Giessharz (166) eingebettet sind, wie Haltelasche (147) mit angeschweisster Befestigunsmutter (149) und Haltewinkel (148) oder Zylinderhülse (150) oder Senkkopfmutter (151) und klarem (144) oder verspiegeltem (145) Rückseitenglas (144) mit Glasbohrungen (167).

### Fig. 21

Die mit Vorderglas (143),doppelseitiger Klebefolie (164), Hologramm (101), Giessharz (166) und Rückenglas (144) konfektionierten (142) Hologramme (101) sind an den Stosskanten (172) der Scheiben mit einem Giessharz (166) eingegossenem Klettverschlussband (152) versehen, die eine schnelle rahmenlose Montage von Wänden (171), Böden (186) und Decken (187) erlaubt. Die Demontage erfolgt durch dreieckige Blechstreifen, die von der Seite in den Klettverschluss geschoben werden.

### Fig. 22

Plane Stator-Solarlichtkonzentratoren (201) aus Transmissionshologrammen (202) nach Fig.23 aufgenommen und im entsprechenden Abstand (203) zueinander, übereinander geschichtet, beugen (204) das Sonnenlicht gerichtet (205) und diffus (206) von allen Seiten auf einen festen Brennpunkt (207) Je mehr Hologrammschichten, um so kleiner der Brennpunkt (207) Die planen Solarkonzentratoren (201) lassen sich in aller Lagen, waagerecht, senkrecht,schräg, verwenden; in der thermischen (202) -und photovoltaischen (204) Solarenergietechnik und in der Solarlichtlenkungstechnik (210) als durchsichtiges, wetterfestes Bauelement (211) Schnitt (231), Draufsicht (211)

### Fig. 23

Die Aufnahme (212) von Hologrammen (202) für Solarkonzentratoren (201) kann mittels sich kreuzender (213) Laser-Spaltlichtquellen (225), Fig. 26 zur Erzeugung von 2 zylinderförmigen Lichtwellen erfolgen, die miteiander interferrieren. Die Rekonstruktions-geometrie (214) ergibt sich aus der Form, Größe und Lage der laserlichtquelle Fig. 26 zum Hologrammfilm (215). Das Hologramm (202) rekonstruiert (216) unabhängig von der Einstrahlrichtung (228) von der Rekonstuktionsseite (214) paralleles Licht (205) auf einen beweglichen Brennpunkt (222).

Vorderansicht (217), Seitenansicht (218), Draufsicht (219).

### Fig. 24

Die Aufnahme (212) erfolgt mit unterschiedlich langen gekreu-zten (221) Laserspaltlichtquellen (225). Das Hologramm (202) wird zylinderförmig (220) gebogen, sodaß paralleles Licht (205) den beweglichen Brennpunkt (222) bildet. Vorderansicht (217), Seitenansicht (218), Draufsicht (219).

### Fig. 25

Die Aufnahme (212) erfolgt mit überlangen ,
gekreuzten (223) Laser-Soaltlichtquellen (225). Das Hologramm (202) wird zylinderförmig (220) gebogen, sodaß paralleles Licht (205) eine bewegliche Brennlinie (224) bildet: wird das Hologramm (202) kugelförmig (227) gebogen, so erzeugt paralleles Licht (205) einen beweglichten Brennpunkt (222). Brennlinie (224) und Brennpunkt (222) bewegen sich entspechend der Einfallsrichtung des Sonnenlichts (228).

### Fig. 26

Aufnahmegeometrien für interferierende Laser-Spaltlichtquellen (225) und oder Laser-Punktlichtquellen (226), wobei die Größen und Abstände zum Hologrammfilm (215) je nach Verwendungzweck variieren. Vorderansichten (217).

### Fig. 27

Zylinderförmigen (220) Stator-Solarkonzentrator (201). Aufnahmetechnik (220,Fig.25), für thermische Solarenergieanlagen (208) wobei hier ein Warme ableitendes Rohr (229) in der resten Brennlinie (230) angebracht ist. Transmissionshologramme (202), Abstände (203), Rekonstruktionsgeometrie (214), Solarstreulicht (206), Sonnenlicht (205) und gebeugtes Licht (237). Vorderansicht (217), Schnitt (231). Für Wärme- und Schallwellenkonzentratoren sind nach Fig.29 Holzstämme geeignet, indem der Stammkern (235) durch Wärme ableitende Rohre (229) oder schallschluckende Stoffe (234) ersetzt wird.

### Fig. 28

Kugelförmiger (227) Stator-Solarkonzentrator (201), Aufnahmetechnik (229,Fig.25). Für thermischen (208)- photovoltaisch (209) und Lichtlenkungs (210) Anlagen.

Im festen Brennpunkt (209) mit einem Rotationselypsoidreflektor (232), wird die Solarenergie so umgelenkt, daß am 2, festen Brennpunkt (233) z.B. eine Brennstelle zum Kochen entsteht. Sonnenlicht (205), Streulicht (206) Beugung (204), Hologramme (202) und Abstände (203) Schnitt (231). Draufsicht (219).

### Fig. 29

Stator-Solarkonzentratoren (201) können in unterschiedlichen Bauformen Solarkessel erwärmen (208), Solarzellen belichten (209) sowie Solarlicht umlenken (210). Bei den Lichtlenkungsanlagen (210) können Reflektoren (235) und Optiken (236) die Lichtverteilung im Brennpunkt übernehmen.

Konzentratoren (201) hintereinandergeschaltet dem Sonnenlicht ausgesetzt, verstärken (237) den Solarenergiestrom (238), Konzentratoren (201) können den Solarenergiestrom (238) umlenken (239) oder Teile des Solarenergiestroms ablenken (240). Schnitt (231).

### Fig. 30

Stator-Solarkonzentratoren (201) können für die Optik (241) von Scheinwerfern (242) verwendet werden, wobei die Aufnahmeart der Konzentratoren den Stranlengang (244) und oder den Brennpunkt (243) der Lampe (242) bestimmt. Die Lichtausbreitung dar Lampe (242) ist von der Art und Form des Reflektors (250) und der Form der Birne (248) weitgehend unabhängig.

### Fig. 31

Stator-Solarkonzentratoren (201) können für Spektrallampen (245) von Hologrammbildplatten (246) verwendet werden, wobei eine Weißlichtbirne (248) mit Streureflektor (250) für viele Spektrallampen (245) reicht. Das Streulicht wird von einzelnen Stator-Konzentratoren (201) gebündelt und im Brennpunkt (243) elektronisch (251) ein- oder aus-geschaltet.

Je nach eingeschaltetem Brennpunkt (243) erleuchtet das Hologrammbildplatten-Picel (252) in den verschiedenen Spektralfarben.

## Patentansprüche

1. Große Transmissions-Regenbogenhologramme für wetterfeste weit sichtbare Werbeflächen,
dadurch gekennzeichnet,
daß bei der Masterkopieherstellung 1 mittels Schablonen 2 mit unterschiedlichen Masterwinkeln 3 und oder Referenzwinkeln 4 und Masterbrennpunkt 5 und Referenzbrennpunkt 6 Entfernungen zur Hologrammkopie diese dergestallt belichtet wird, das im gewünschten Beobachtungsbereich 7 die Motive der Schablonen 2 auch in großen Entfernungen in den gewünschten Spektralfarben 8 sichtbar werden.

2. Hologramme nach Anspruch 1,
dadurch gekennzeichnet,
daß der Brennpunkt(6) der Referenzoptik (9) im Beobachter Augenpunkt (7) liegt und der Brennpunkt (5) der Masteroptik (10) im Leuchtmittelpunkt (11) der Weißlichtlampe (12) liegt.

3. Hologramme nach Anspruch 1-2,
dadurch gekennzeichnet,
das die holografische Werbefläche (13) je nach Größe aus einem großen Hologramm (1) oder mehren kleinen Hologrammen (1) bestehen kann, die wiederum unterschiedliche Größen haben können.

4. Hologramme nach Anspruch 1-3,
dadurch gekennzeichnet,
daß alle Motivbestimmenden Winkeldaten (3und 4) über ein Rechenprogramm laufen können, das die Steuerung der optischen Komponenten veranlaßt.

5. Hologramme nach Anspruch 1-4,
dadurch gekennzeichnet,
daß die Masterposition (10) und Referenzposition (4) vertausche werden können und im Rahmen eines akzeptablen Beugungswirkungsgrades unterschiedliche Winken zuein ander haben können(25, 26, 27).

6. Hologramme nach Anspruch 1-5,
dadurch gekennzeichnet,
daß durch das anbringen von Spiegeln auf der Rückseite (21, 24) des Hologramms (1) das Weißlicht (12) spiegelbildlich auf der Vorderseite des Hologramms einfallen kann.

7. Hologramme nach Anspruch 1-6,
dadurch gekennzeichnet,
daß sie wetterfest und montierbar konfektioniert sind zwischen zwei Klarglasscheiben (22,23). Das Hologramm (1), Film (14) mit Filmträges (15), wird mit einem doppelseitigen klaren Laminat (16) mit der Filmseite (14) auf die Innenseite (11) einer Scheibe (22) oder (23) laminiert, wobei des Laminat (16) zur Rückseite des Filmträgers (15) hin umgebörtelt (18) wird, damit die holografierte empfindliche Filmschiecht (14) hermetisch eingekapselt ist. Glasscheibe (22) mit Laminat (16), Film (14) mit filmträger (15) wird parallel mit der Glasscheibe (23) mit und oder ohne Montagerahmen (19) mit klurem Gießharz (20) vergossen.

8. Hologramme nach Anspruch 7,
dadurch gekennzeichnet,
daß bei verspiegelten Hologrammen nach Anspruch 6 die Spiegelfläche (21) wie bei einem Normalspiegel außen auf der Glasscheibe (22) oder (23) liegen kann oder also Oberflächenspiegel (24) innen auf der Glasscheibe (22) oder (25) liegen kann.

9. Fernsicht-Hologramme (1)
dadurch gekennzeichnet,
dass, Fig. 6 und 7, bei Hologrammfilmen, plan (103) oder gebogen (111), mit spezieller Aufnahmegeometrie (102) aufgenommen, die Rekonstrucktionsgeometrie (104) so ausfällt, dass für jeden einzelnen Punkt (105) des Hologramms bei entsprechender Beleuchtungsgeometrie (106) alle austretenden Rekonstruktionsstrahlen (107) gleicher Wellenlänge (108) parallel (109) zueinander verlaufen.

10. Hologramme nach Anspruch 9
dadurch gekennzeichnet,
dass, Fig. 8 und 9 , die Beleuchtungsstrahlen (116) der Hologrammbeleuchtung (118) für jeden einzelnen Punkt des Hologramms identisch sind mit den Beleuchtungsstrahlen (117) des Hologramms (101) und die Ausleuchtung über die ganze Hologrammfläche (125) gleich helle (126) ist, und die Beleuchtungestrahlen (116) sich zwischen Brennpunkt (119), bzw Brennpunktlinie (124) und Hologramme (101) nicht kreuzen, und die Grundformen der Beleuchtungsgeometrie (105) Strahlenbündel in Kegelform (127), Keilform (128) und Zylinderform (129) sind.

11. Hologramme nach Anspruch 9-10
dadurch gekennzeichnet,
dass, Fig. 10 und 11, die Hologramme plan (110) oder gebogen (112) eine Rekonstruktionsgeonetrie (104) ergeben, die für jeden einzelnen Punkt (105) des Hologramms identisch ist mit den Beleuchtungastrahlen (117) des Hologramms und denen der Hologrammbeleuchtung (116), damit die Rekonstrucktionsstrahlen (107) für gleiche Wellenlängen (108) parallel (109) sind.

12. Hologramme nach Anspruch 9-11
dadurch gekennzeichnet,
dass, Fig. 11, bei der Holgrammfilmbelichtung (103,111) die Laserstrahlenstruktur, für Objektlicht (113,114) und Referenzlicht (115) für jeden einzelnen Punkt des Hologramms (105) so eingerichtet ist, dass das Hologramm (103) den Beleuchtungsbedingungen (106) und Rekonstruktionsbedingungen (104) für Fernsichthologramme (101) entspricht.

13. Hologramme nach Anspruch 9-12
dadurch gekennzeichnet,
dass, Fig. 12 das Objektlicht (137) bei der Aufnahme (102) von einem Laser (138) einem holografisch optischen Element (140) oder einem Masterstreifen (141) kommen kann und die Form und Lage zum Hologrammfilm (103,111) und zur Referenzlichtquelle (115) für jeden Punkt des Hologramms (105) die Bedingungen der Beleuchtung (118) und Rekonstruktion (107) für Fernsichthologramme (112) erfüllt.

14. Hologramme nach Anspruch 9-13
dadurch gekennzeichnet,
dass, Fig. 13, bei gebogenem Hologrammfilm (111) und symmetrisch angeordnetem Master (114) und Referenzlicht (115) das plane Hologramm (110) mit parallelen Strahlenbündeln (109), durch eine parallelstrahlenbündelleuchte (129) in allen vier Richtungen als Fernsichthologramm (101) rekonstruiert.

15. Hologramme nach Anspruch 9-14
dadurch gekennzeichnet,
dass, Fig. 14, bei der Aufnahmegeometrie (102) der gebogene Hologrammfilm (111) von zwei Referenzlichtquellen (115) und einem kurzen Masterstreifen (113) belichtet wird, das plangestellte Hologramme (110) mit 1 oder mehreren Lichtquellen (118) aus unterschiedlichen Positionen beleuchtet werden, und die Beleuchtungsgeometrie (106) kegelförmig ist und im Brennpunkt (119) in vier Richtungen bewegt wird, sodass für einen Beobachter unterschiedliche Spektralfarben (155) entstehen.

16. Hologramme nach Anspruch 9-15
dadurch gekennzeichnet,
dass, Fig. 15, bei planem Holografiefilm (103) und oberhalb und unterhalb des Masters (114) gelegenen Referenzlichtern (115) die Rekonstruktion (107) für Sonnenlicht (134), so gelenkt werden kann, dass sie der ständig die Position wechselnden Sonne nachfolgt.

17. Hologramme nach Anspruch 9-16
dadurch gekennzeichnet,
dass, Fig. 16, ein Hologrammfilm (103), der mit einem kreuzförmigen Master (114) aufgenommen, eine Rekonstruktionsgeometrie (104) ergibt, die von beiden Seiten des Hologramms (101) mit einer Parallelstrahlleuchte (129) oder Sonnenstrahlen (134) ausgeleuchtet werden kann, wobei die Lichtquellen (129,134) sich in allen drei Raumrichtungen bewegen können (163).

18. Hologramme nach Anspruch 9-17
dadurch gekennzeichnet,
dass, Fig.17, Teile das gebogenen Hologrammfilme mit (111) Schablonen (135) oder Raster (136) aus schwarzen (191) und leeren (192) Feldern beim Belichten nacheinander abgedeckt werden in der Reihenfolge der verschiedenen Masterpositionen (141) tei einer gleichbleibendem Referenzlichtposition (115), oder einzelne unterschiedlich belichtete Hologrammfilmteile werden nach dem Belichten entsprechend dem Motiv 54) zusammengesetzt. Bei der Rekonstruktion (107) mit einer passenden Hologrammbeleuchtung (118) steht der Beobachter ein Motiv 54) auf dem Hologramm (101) mehrfarbig (155) in den Spektralfarben rot (188), blau (189) und grün (190).

19. Hologramme nach Anspruch 9-18
dadurch gekennzeichnet,
dass, Fig. 18, die computergesteuerte (177) Regenbogenhologramm-Bildfläche (178), nach Figur 14 verschiedene Spektralfarben für eine Teilfläche bzw Picel (180) eines Hologramms (101) für eine Beobachterposition (153) erzeugt, indem die Position der Hologrammlichtquelle (118) in Sichtung der Spektralaufweitung (181) verändert wird, oder umgekehrt bei einer festen Postion der Lichtequelle (118) die Richtung des Hologramms (101) verändert wird, die Picel (180) erzeugende Hologrammbeleuchtung (118) eine kompackte kleine Mehrfachlichtpunktbirne (182) ist, die über eine Platine (183) auswechselbar mit der Steuerelektronik (184) als Modul (185) verbunden ist, das Hologramm (101) eine ganzflächige Aufnahme ist.

20. Hologramme nach Anspruch 9-19
dadurch gekennzeichnet,
dass der Hologrammfilm (103, 111) bei der Aufnahme (102) unterschiedlich gross, aus einem Stück oder mehreren Einzelteilen, mit Schablonen (135) oder Ratser (136) belichtet, plan (103) oder gebogen (111) sein kann entsprechend den Anforderungen an die Rekonstruktionsgeometrie (104) für Fernsichthologramme (101). Fig. 19.

21. Hologramme nach Anspruch 9-20
dadurch gekennzeichnet,
dass, Fig.20, die Konfektionierung (142) im Aussenbereich zwischen 2 Glasscheiben, Vorderglas (143) und Rückenglas (144) mit und ohne Spiegel (145) erfolgt, ohne dass auf dem Vorderglas (143) Befestigungsvorrichtungen (146) wie: Lasche (147) mit Rahmen (148) und Mutter (149), Zylinderhülse (150), Senkkopfmutter (151), zu sehen sind, und wetterfest sind.

22. Hologramme nach Anspruch 9-21
dadurch gekennzeichnet,
dass, Fig. 21, für rahmenlose Glaswände (171), verspiegelt oder durchsichtig, die aus konfektionierten (142) Hologrammen (101) hergestellt werden, die rundum an den Stosskanten (172) mit Klettverschlussband (152) versehen sind, sodass eine schnelle Montage und Demontage möglich ist.

23. Stator-Solarkonzentratoren (201)
dadurch gekennzeichnet,
daß, Fig.22, mehrere Transmissionshologramme(202) spezieller Bauart(Fig.23,24,25,26) im bestimmten Abstand (203) übereinandergestapelt sind, damit das aus verschiedenen Richtungen einfallende Sonnenlicht (205,206) durch die einzelnen Hologramme (202) gebeugt (204), einen festen Brennpunkt (207 )bildet und damit ain Nachführen wegfällt; daß der Brennpunkt (207) umso kleiner wird, je mehr Hologrammschichten (202) verwendet werden; die Stator-Solarkonzentratoren (201) in allen Lagen zur sonne verwendet werden können; für thermische (208) und photovoltaische (209) Solarenergieanlagen und Solarlichtlenkungstechnik (210) geeignet sind und also durchsichtiges, wetterfestes Bauelement (211) hergestellt werden können.

24. Konzentratoren nach Anspruch 23
dadurch gekennzeichnet,
daß, Fig. 23,die Aufnahme (212) von Hologrammen (202) für Stator-Solarkonzentratoren (201) mittels sich kreuzender (213) Laser-Spaltlichtquellen (225) erfolgt, sodaß paralleles (205) bewegtes (228) Sonnenlicht von der Rekonstruktionsseite (214) her, einen bewglichen Brennpunkt (222) rekonstruiert (216).

25. Konzentratoren nach Anspruch 23-24
dadurch gekennzeichnet,
daß, Fig. 24 die Aufnahme (212) des Hologrammfilms (215) mit unterschiedlich langen gekreutzten (221) Laser-Spaltlichtquellen (225) erfolgt und das Hologramm (202) bei der Rekonstruktion (216) zylinderförmig (220) gebogen ist und einen beweglichen Brennpunkt (222) erzeugt, abhängig von der Einstrahlrichtung (228) der Sonne.

26. Konzentratoren nach Anspruch 23-25
dadurch gekennzeichnet,
daß, Fig. 25, die Aufnahme (212) des Hologrammfilms (215) mit gleichlangen, hologrammbreiten gekreuzten (223) Laser-Spaltlichtquellen (225) erfolgt und das Hologramm (202) bei der Rekonstruktion (216) zylinderförmig (220) gebogen ist und eine bewegliche Brennlinie (224) erzeugt; das Hologramm (202) bei der Rekonstruktion (216) kugelförmig (227) gebogen ist und einen beweglichen Brennpunkt (222) erzeugt, jeweils abhängig von der Einstrahlrichtung (228) der Sonne.

27. Konzentratoren nach Anspruch 23-26
dadurch gekennzeichnet,
daß, Fig. 26, die Aufnahmegeometrien so konstruiert sind, daß Spaltlichtquellen(zylinderförmige Wellenfronten) (225) und oder Punktlichtquellen(kugeförmige Wellenfronten) (226) sich kreuzend interferieren, wobei die Formen, Größen und Abstände zum Holografiefilm (215) je nach Verwendungszweck variieren.

28. Konzentratoren nach Anspruch 23-27
dadurch gekennzeichnet,
daß, Fig 27, die Aufnahme der Hologramme (202 nach Fig. 25 erfolgt und die fertigen Hologramme (202) zu Zylindern (220) geformt werden, die ein wärmeleitendes Rohr (229) unhüllen.

29. Konzentratoren nach Anspruch 23-28
dadurch gekennzeichnet,
daß, Fig. 28, die Aufnahme nach Fig. 25 erfolgt und die fertigen Hologramme (202) kugelförmig (227) geformt sind, sodaß Solarenergie vom 1. festen Brennpunkt (207) mittels eines Rotationselypsoidreflektors (232) zum 2. festen Brennpunkt (233) gelenkt wird.

30. Konzentratoren nach Anspruch 23-29
dadurch gekennzeichnet,
daß, Fig. 29, sie in unterschiedlichen Bauformen verwendet werden können. Hintereinandergeschaltet kann der Solarenergiestrom (238) verstärkt (237), umgelenkt (239) und abgelenkt (240) und mit Reflektoren (235) und Optiken (236) kombinierte werden.

31. Konzentratoren nach Anspruch 23-30
dadurch gekennzeichnet,
daß, Fig. 30, sie für die Optik von Scheinwerfern (241) verwendet werden können und der Strahlengang (244) durch die Wahl der Aufnahmegeometrie des Hologramms (242) bestimmt wird.

32. Konzentratoren nach Anspruch 23-31
dadurch gekennzeichnet,
daß, Fig.31, sie für Spektralfarbenlampen (245) von Hologrammbildplatten (246) verwendet werden, um die Spektralfarbensteuerung der Bildplatten-Picel (252) zu ermöglichen. Das Licht der Lichtquelle (248) wird durch die Konzentratoren (201) über einen Brennpunkt (243) mit elektronischer Lichtstromunterbrechung (251) ein- oder ausgeschaltet, sodaß das Picel (252) je nach Einfallswinkel des Lichts in den verschiedenen Spektralfarben aufleuchtet.
